# EUROPEAN PATENT APPLICATION

(11) **EP 4 818 899 A1**
(43) Date of publication of application: **07.10.2026**
(21) Application number: 26165149.1
(22) Date of filing: 16.03.2026
(51) Int. Cl.: G06F 9/48, G06F 9/50

(54) **DIRECTED ACYCLIC GRAPH TRAVERSAL FOR THE OPTIMAL ALLOCATION OF MEDIA PROCESSING AND ARTIFICIAL INTELLIGENCE WORKLOADS**

(30) Priority: 31.03.2025 NO 20250347
(71) Applicant: Pexip AS, 0283 Oslo (NO)
(72) Inventor: Hockley, Benjamin John, Reading, RG10 9TR (GB); Bell, John-Mark, Brentford, Middlesex TW8 9NW (GB); Hymers, Mark, Biggar, South Lanarkshire ML12 6EN (GB); Ryu, Junghun, Kolbotn 1410 (NO)
(74) Representative: Acapo Onsagers AS

(57) **Abstract**

A system and method for orchestrating artificial intelligence (AI) and media processing workflows in a distributed computing environment. The method involves modeling processing nodes as a directed acyclic graph (DAG) where each node represents a discrete processing entity and each edge represents a communication path. A central controller dynamically discovers processing nodes, determines their capabilities, and constructs an optimal execution pipeline using graph traversal algorithms such as Dijkstra's algorithm or the A* search algorithm. The system assigns AI and media processing tasks to selected nodes based on network latency, computational load, and resource availability. Execution pipelines are dynamically adjusted in response to real-time network conditions, server availability, or processing demands, ensuring optimized resource allocation. The system supports various AI-driven media processing tasks such as speech-to-text conversion, text translation, text-to-speech conversion, video enhancement, and audio enhancement. It enables efficient task orchestration across heterogeneous hardware architectures, including CPU, GPU, and TPU-based servers. The system is designed to minimize latency and maximize processing efficiency by reconfiguring execution pipelines based on changing operational conditions. By leveraging directed graph-based optimization, the invention enhances media processing efficiency, reduces latency, and enables scalable Al-driven communication applications.

## Description

### Technical field

The present invention relates to the field of unified communications, which encompasses voice, video, and text communication in both real-time and asynchronous contexts. More specifically, the invention involves the integration and application of Artificial Intelligence (AI) to enhance and extend the capabilities of these communication systems. AI can be employed to interact with, modify, transform, or otherwise process the audio, video, and text data involved in communication exchanges. The invention addresses the challenges associated with efficiently and reliably composing distributed video, voice, text, and AI services into a cohesive end-to-end system, particularly focusing on overcoming the complexity of such integration.

### Background

In the current landscape of distributed videoconferencing and communication systems, the ability to process, manipulate, and transform multimedia streams, such as voice, video, and text, is critical for facilitating effective collaboration. The integration of various servers-each specialized in either media processing or AI-based enhancements-is required to handle these streams and improve user experience. For example, AI can provide advanced functionalities such as speech-to-text conversion, real-time translation, text-to-speech synthesis, and the enhancement of video and audio quality.

Conventional approaches face significant challenges when attempting to create and orchestrate a cohesive processing pipeline across multiple, geographically distributed servers. These servers often vary in terms of hardware capabilities and network locations, leading to inefficiencies in resource utilization, latency issues, and limited scalability.

Several AI workloads are relevant to this field, including but not limited to:
- (A) Speech-to-text conversion: Converting spoken audio into text (e.g., live captions during a meeting).
- (B) Text translation: Translating text from one language to another (e.g., English to Spanish).
- (C) Text-to-speech conversion: Converting written text into synthesized speech.
- (F) Video enhancement: Improving video quality using AI techniques.
- (G) Audio enhancement: Reducing background noise and enhancing audio clarity.

These AI workloads can be combined into processing pipelines to perform more complex tasks, such as translating spoken English audio into Spanish audio by sequentially using speech-to-text (A), text translation (B), and text-to-speech (C). However, orchestrating such pipelines efficiently across a distributed system requires a sophisticated approach that takes into account factors like network latency, server capacity, and resource availability.

The complexity of efficiently organizing and executing AI-enhanced media processing workflows is exacerbated when multiple processing nodes must be synchronized to form end-to-end pipelines. For example, transforming spoken English into spoken Spanish requires a sequence of AI-driven operations, including speech recognition, translation, and speech synthesis. Efficient orchestration of such workflows necessitates an advanced system capable of dynamically evaluating and optimizing processing paths based on real-time network and computational constraints.

### Summary

In view of the above, an object according to embodiments of the present application is to overcome or at least mitigate drawbacks of prior art video conferencing systems.

In a first aspect, a method for orchestrating artificial intelligence (AI) and media processing workflows in a distributed computing environment is provided, including the steps of modeling processing nodes as a directed acyclic graph (DAG), wherein each node represents a discrete processing entity and each edge represents a communication path between nodes, discovering available processing nodes and determining their processing capabilities and network locations, constructing an execution pipeline by applying a graph traversal algorithm to identify an optimal sequence of processing steps based on network latency, computational load, and resource availability, assigning AI and media processing tasks to selected nodes in the pipeline, the processing tasks in accordance with the established execution pipeline, monitoring real-time network conditions and computational load of the nodes and dynamically adjusting the execution pipeline in response to changes in network latency, server availability, or processing demands.

In a second aspect, a system corresponding to the method above is also provided.

### Brief description of the drawings

Figure 1 illustrates a diagram showing components in a single location,
Figure 2 illustrates a diagram showing components located geo-redundantly in multiple locations,
Figure 3a illustrates a diagram showing English To Spanish Audio pipeline in a single location,
Figure 3b illustrates an alternative representation of figure 3a.
Figure 4a illustrates a diagram showing English To Spanish Audio pipeline pipeline in a single location, working around the unavailability of a desired component by composing a sub-graph of alternative components.
Figure 4b illustrates an alternative representation of figure 4a.
Figure 5 illustrates a diagram showing a distributed environment using different components from different geographies to form the graph that delivers the desired functionality

### Detailed description

According to embodiments of the present application as disclosed herein, the above-mentioned disadvantages of solutions according to prior art are eliminated or at least mitigated.

The present invention provides a method and system for orchestrating AI and media processing workflows in a distributed computing environment. By modeling processing nodes as a directed acyclic graph (DAG), the invention enables an optimal selection of processing paths that minimize latency, balance computational load, and maximize resource utilization.

A controller manages the discovery and allocation of processing resources across distributed AI and media processing nodes. The controller dynamically constructs an execution pipeline by leveraging graph traversal algorithms, such as Dijkstra's algorithm or the A* search algorithm, to identify the most efficient sequence of processing steps. Each node in the DAG represents a discrete processing entity, such as a speech recognition engine, translation service, or video enhancement module, while the edges between nodes are weighted based on factors such as latency, cost, and compatibility of input and output formats.

By dynamically evaluating and updating execution paths based on real-time conditions, the system ensures that media processing pipelines remain optimized under varying network and computational constraints. This capability is particularly advantageous in scenarios where multiple AI-based transformations must be performed in succession, such as automated speech translation or Al-enhanced video conferencing.

### Overview of System Components and Workflow

The invention includes one or more controllers responsible for managing the orchestration of AI and media processing entities distributed across multiple servers. These servers may reside in different geographic locations and may differ in terms of their underlying hardware and capabilities (e.g., CPU, GPU, TPU). The controller is tasked with discovering the available processing entities, their capabilities, and their locations within the distributed architecture. This discovery can be either static, through pre-configured knowledge, or dynamic, through real-time queries and updates.

The system consists of a distributed architecture of processing nodes, each of which is responsible for executing specific AI or media processing tasks. These nodes may reside in different geographic locations and may be optimized for different types of workloads, such as CPU-based tasks, including basic transcoding, or GPU/TPU-based AI inference, such as deep learning-based speech recognition or video enhancement.

A central controller is configured with, or dynamically discovers one or more available processing node(s). The central controller then orchestrates the workflow by constructing an execution pipeline based on system requirements. The central controller gathers information about each node's processing capabilities, network location, and real-time performance metrics. Based on this information, it applies graph traversal algorithms to compute an optimal execution path through the DAG.

Once the central controller identifies the available processing entities, it can reserve capacity on these entities to compose a media and AI processing pipeline. A pipeline in this context refers to a series of processing stages where the output of one stage is passed as input to the next stage. For example, a pipeline might consist of stages for speech-to-text conversion, translation, and text-to-speech synthesis. The pipeline architecture leverages known techniques from media processing frameworks, such as GStreamer, to enable flexible and modular composition of processing elements.

The distributed servers and their corresponding AI and media processing capabilities are modeled as a graph. In this graph, each node represents a server or processing entity, and each edge (or vertex) between nodes is weighted to reflect critical considerations such as network latency, cost of using the resource, and other performance metrics. By modeling the system in this way, the central controller can evaluate the various possible combinations of servers and processing stages to form a valid pipeline that meets the functional requirements of the task at hand.

The central controller uses graph traversal algorithms to identify a valid combination of distributed servers that can form the desired processing pipeline. The selection of servers takes into account the input/output capabilities of each node (e.g., whether it can process certain formats of audio, video, or text), as well as other operational factors, such as location and network latency. In cases where optimal performance is required, weight-aware graph traversal algorithms, such as Dijkstra's algorithm or the A* search algorithm, can be employed. These algorithms consider the weights on the edges between nodes (representing, for example, latency or cost) and aim to find the most optimal path through the graph. This ensures that the chosen pipeline not only delivers the desired functionality but also does so in an efficient and resource-conscious manner.

The weighting of edges within the DAG is critical to ensuring efficient operation. The time required for data transmission between nodes, also known as network latency, is a fundamental parameter in determining the optimal path. Processing cost, referring to the computational expense associated with executing an AI workload on a particular node, must also be considered. Additionally, the compatibility of input and output formats between nodes ensures that data can be effectively processed as it moves through the pipeline. Real-time load conditions, which reflect the current processing demands on each node, play a crucial role in maintaining efficient performance. These factors are dynamically assessed and influence how processing tasks are assigned within the DAG structure.

The central controller is designed to dynamically adapt processing workflows in response to changes in network conditions or processing demands. If a node becomes overloaded or experiences increased latency, the central controller can reroute processing tasks to an alternative node, thereby ensuring continuous and efficient performance. This adaptability allows the system to maintain optimal functionality even in highly variable environments.

Different use cases may have different priorities when it comes to balancing latency, cost, capacity, and availability. For example, in a noise-removal scenario, low network latency is essential, as users expect near-real-time results. In contrast, a translation task may be more tolerant of latency, as translation inherently involves some delay due to the processing requirements. The invention allows for dynamic configuration based on the specific use case, enabling pipelines to be optimized accordingly. For instance, in cases where network conditions fluctuate, the system can dynamically re-route certain processing stages to less congested servers to maintain performance targets.

The invention also addresses the allocation of resources by ensuring that processing workloads are assigned to servers with the most appropriate hardware for the task. Unlike existing solutions, which may inefficiently co-locate processing pipelines on a single type of server, this invention allocates distributed workloads across heterogeneous servers with varying capabilities (e.g., CPU, GPU, TPU) to optimize performance. For example, AI workloads that involve deep learning models for video enhancement might be assigned to servers equipped with GPUs or TPUs, while less computationally intensive tasks, such as basic audio transcoding, might be assigned to CPU-based servers. This intelligent allocation reduces the risk of bottlenecks and maximizes the efficient use of resources across the distributed system.

### Example 1: Automated speech translation

In an automated speech translation scenario, the system orchestrates a three-stage AI pipeline consisting of speech recognition, translation, and speech synthesis. The central controller selects the most efficient nodes for each task, ensuring low latency and high translation accuracy. Each processing step is evaluated based on real-time network conditions and computational load, allowing the system to make intelligent routing decisions.

In a video conferencing environment, the system dynamically routes video streams through a series of AI enhancement nodes, including background noise reduction, real-time translation of captions, and adaptive video resolution scaling. These AI-driven improvements enhance the overall communication experience by optimizing audio and video quality in real time.

In a cloud-based AI inference system, the central controller intelligently distributes workloads across GPU-accelerated and CPU-based nodes, optimizing cost and processing efficiency. For instance, high-performance AI inference tasks may be assigned to GPU-enabled nodes, while lower-priority workloads may be processed on general-purpose computing resources.

In this scenario, the system orchestrates a pipeline that translates English audio into Spanish audio. The pipeline involves three stages:
- Stage 1: English speech-to-text conversion (Node A)
- Stage 2: English-to-Spanish text translation (Node B)
- Stage 3: Spanish text-to-speech conversion (Node C)

The central controller uses graph traversal algorithms to find suitable servers for each stage of the pipeline. It may weigh factors such as network latency and server load when determining the optimal configuration.

### Example 2: Audio Upscaling with Latency Constraints

In another use case, a system is tasked with upscaling low-quality audio streams while minimizing network latency. The pipeline consists of two stages:
- Stage 1: Low-quality audio input (Node H)
- Stage 2: AI-driven audio enhancement (Node G)

For this use case, the graph traversal algorithm prioritizes low-latency network paths to ensure that the audio processing remains real-time or near-real-time.

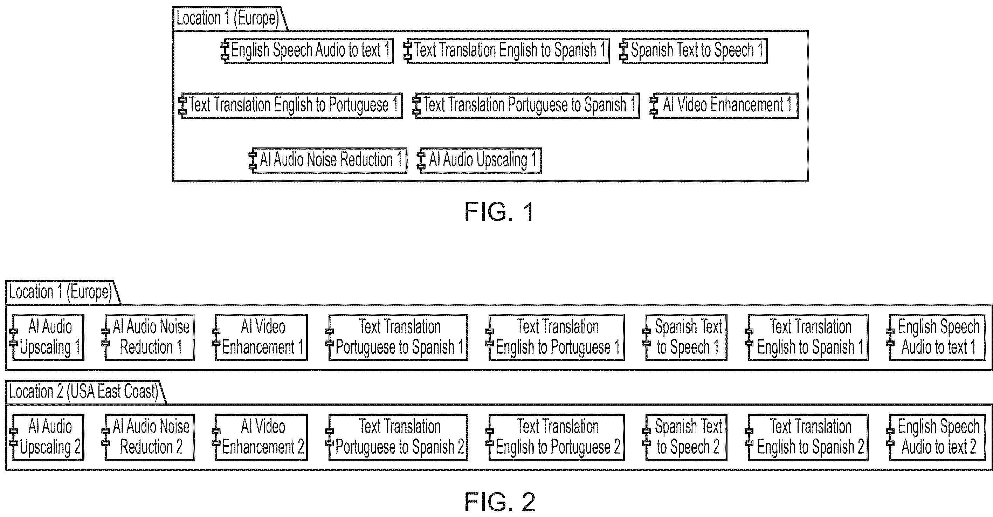

Figure 1 illustrates a diagram showing the above components in a single location.

Figure 2 illustrates diagram showing components located geo-redundantly in multiple locations.

These workloads may be composable in a pipeline to deliver advanced processing, such as English Audio to Spanish Audio translation by composing items A, B and C from the list above:
English Audio Speech => (A) => English Text => (B) => Spanish Text => (C) => Spanish Audio Speech.

The (A, B, C) pipeline above uses the services (A), (B) and (C) together in a sequence in order to be able to transform English Audio to Spanish Audio. This would be analogous to direct translation provided by a human interpreter.

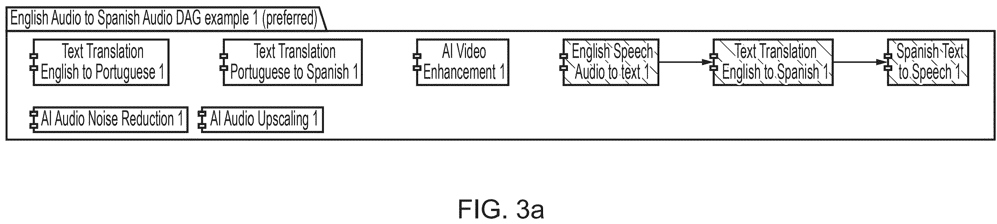

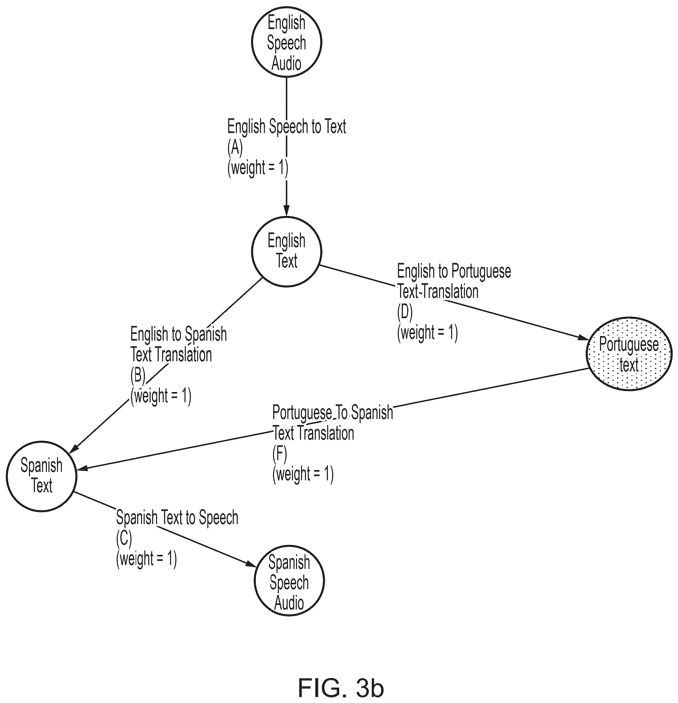

Figure 3a and 3b illustrates one example of English Audio to Spanish Audio Translation. Here, it is shown how multiple discrete components (vertices) can be linked into a single graph that provides richer functionality than any one component can deliver alone.

In this instance, the "needed" service is English Audio to Spanish Audio translation. The solution can solve for this use case in several different ways, such as the (A, B, C).

There are sometimes multiple solutions to meet the same need. The simplest graph (fewest nodes/vertices) might often be the preferred solution.

An alternative pipeline that could achieve a comparable outcome of converting from English Audio to Spanish Audio might be the (A, D, F, C) pipeline.

Figure 3b represents parts of diagram 3a which are replacing the edges (links) with vertices (nodes) and likewise replaces vertices with edges, and assigns each edge a "weight". Multiple discrete components (vertices) can be linked into a single graph that provides richer functionality than any one component can deliver alone.

In this instance, the "needed" service is English Audio to Spanish Audio translation. The solution can solve for this use case in several different ways, such as (A, B, C) as illustrated herein.

By considering the sum of "weights" along a path, one can see that on this graph the cheapest route from the English Speech Audio node to the Spanish Speech Audio node is via edges A, B and C with a total weight of 1+ 1 +1 = 3. (edges F and D, which could also offer a viable path, need not be used)

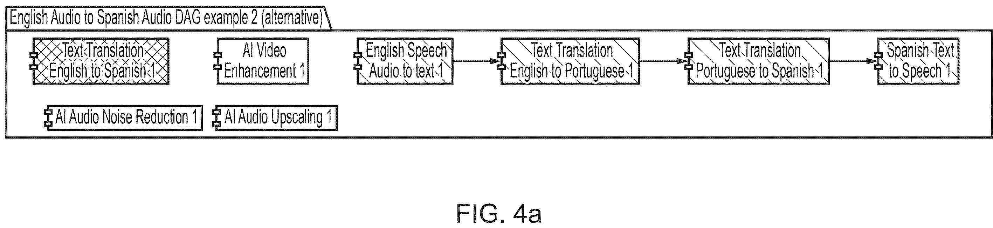

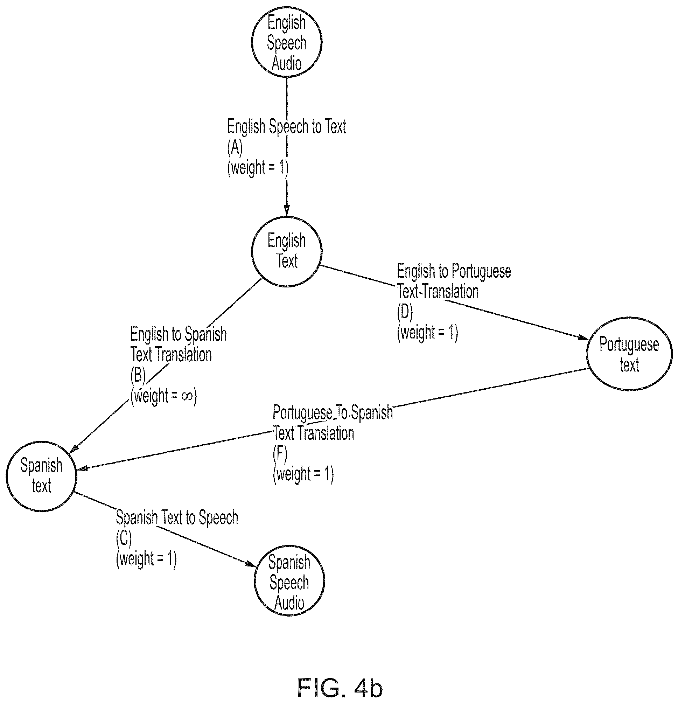

Figure 4 a and b illustrates English To Spanish Audio pipeline pipeline in a single location, working around the unavailability of a desired component by composing a sub-graph of alternative components.

In figure 4a, the diagram illustrates an alternative graph that provides English To Spanish audio translation. This graph works around the fact that the "Text Translation English to Spanish 1" component (illustrated with diamond grid pattern) is at full capacity and unable to handle further load (or is otherwise unavailable e.g. due to a service outage). This graph instead translates from the source language (English) to the target language (Spanish) via an intermediate language (Portuguese).

This is analogous to "relay translation" sometimes provided by teams of human interpreters working at large multi-lingual events - and is less optimal than direct translation due to the increases in latency and/or loss of fidelity of translation but if no "B" services are available (due to outage or capacity constraints) then using this less efficient pipeline might be preferable to having no English Audio to Spanish Audio service whatsoever.

Figure 4b shows the same information as 4a in an alternative representation where once again edges and vertices have been swapped. Here, the "English to Spanish Text Translation" is modelled as a component being at full capacity (or otherwise unavailable) and unable to handle further load. The weight on the corresponding link (B) has had its weight to infinity (∞) to reflect this.

By considering the sum of "weights" along a path, one can see that on this graph the cheapest route from the English Speech Audio node to the Spanish Speech Audio node is via edges A, D, F and C with a total weight of 1+ 1 +1 + 1 = 4. (edge B with its weight of ∞ is not used).

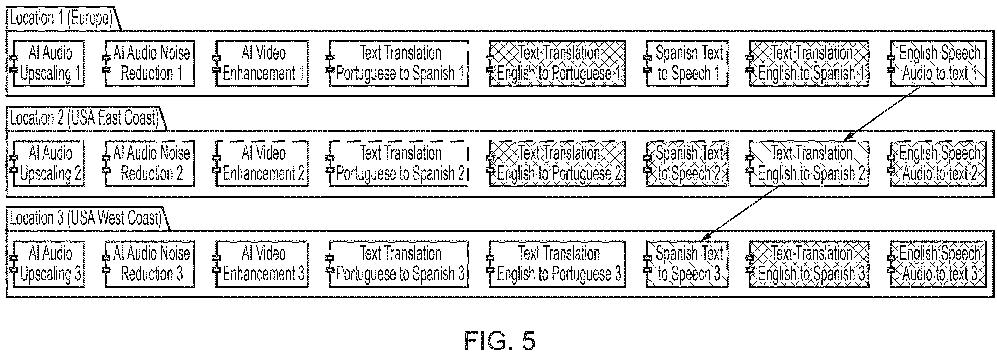

Figure 5 shows the delivery of a geo-distributed English To Spanish translation working around multiple outages across multiple geographies. This illustrates how the solution can be generalised in a distributed environment and use different components from different geographies to form the graph that delivers the desired functionality. Temporarily unavailable services are marked with diamond grid pattern, and the optimal graph is marked with diagonal line pattern, accounting for these outages.
- In addition to working around multiple service outages, the solution can consider various differing "costs" of constructing a graph to provide a given service:
- Some entities providing the service may be rented on-demand, for example from cloud providers, rather than permanently owned by the organisation using them.
- Some types of processing (e.g. audio processing) may be most efficiently performed by traditional low-cost, general-purpose CPU based server architectures (such as those based on Intel, AMD or ARM processors and others).
- Other types of processing (such as speech recognition or language translation or advanced video processing) may be most efficiently performed by high-powered GPU or TPU enabled servers typically using more expensive, powerful, specialist chips from the likes of NVIDIA, AMD and others.
- Certain types of processing may be provided by a GPU, TPU or CPU based system; other types of processing may only be available on a specific system.
- In an advanced communication scenario such as a video conference which includes multiple AI services of different types, a distributed heterogeneous server architecture may be the most optimal solution to deliver these services, involving an ensemble of a variety of both CPU and GPU/TPU based servers working alongside the traditional video conferencing server infrastructure.

Latency:
- Some workloads are highly latency sensitive; some are less so.
- For example, for audio background noise removal in a conference, even the addition of a few tens or hundreds of milliseconds of delay (due to transmission and/or processing delays) can have a seriously adverse effect on the overall conferencing experience. Therefore, it is preferable when using an audio-processing server to choose one that is geographically co-located (when possible) with the other servers handling the audio streams.

- As an opposite example, we have language translation. Translation between certain pairs of languages, can require the entirety of a sentence to have been received for processing before the sentence can be correctly translated, as the meaning of certain words later in the sentence can impact how words earlier in the sentence should be interpreted.
- Thus, when processing real-time human speech, a computer may sometimes be required to wait for the human to finish uttering the entire sentence before it can correctly translate the sentence. This may naturally result in an inherent processing delay of a number of seconds (the length of the utterance) - and thus, for this workload, additional latency of a few tens or hundreds of milliseconds when providing text captions or a machine generated audio translation may make little difference to the overall conference experience relating to translation.

One of the main advantages of the present invention is efficient resource utilization. The invention reduces inefficiencies by distributing workloads across servers with the most appropriate hardware resources, leading to improved performance and cost-effectiveness.

Another advantage is scalability. The system can scale seamlessly across multiple geographic locations and heterogeneous server architectures, providing flexibility in resource allocation.

Further, dynamic adaptation is also an important advantage. The use of graph traversal algorithms allows the system to adapt dynamically to changes in network conditions, server availability, and workload demands, ensuring optimal performance under varying conditions.

Last but not least are customizable pipelines. The invention supports the creation of custom pipelines tailored to the specific needs of different use cases, allowing users to prioritize latency, cost, or other factors as required.

The invention offers several advantages over conventional AI-powered media processing architectures. The system intelligently distributes workloads to maximize efficiency and minimize latency, ensuring optimized resource allocation. By leveraging a graph-based approach, the invention allows for seamless scalability across multiple geographic regions and heterogeneous server architectures. Real-time reconfiguration of execution paths ensures robustness under changing network and computational conditions. Additionally, the ability to create customizable pipelines enables users to prioritize factors such as latency, cost, or processing power based on specific use-case requirements.

In summary, this invention provides a novel, scalable, and flexible framework for orchestrating AI and media processing workflows, significantly improving efficiency and adaptability in distributed computing environments.

## Claims

1. A method for orchestrating artificial intelligence (AI) and media processing workflows in a distributed computing environment, **characterized in**:
a. modeling processing nodes as a directed acyclic graph (DAG), wherein each node represents a discrete processing entity and each edge represents a communication path between nodes;
b. dynamically discovering available processing nodes and determining their processing capabilities and network locations;
c. constructing an execution pipeline by applying a graph traversal algorithm to identify an optimal sequence of processing steps based on network latency, computational load, and resource availability;
d. assigning AI and media processing tasks to selected nodes in the pipeline;
e. executing the processing tasks in accordance with the established execution pipeline;
f. monitoring real-time network conditions and computational load of the nodes; and
g. dynamically adjusting the execution pipeline in response to changes in network latency, server availability, or processing demands.

2. The method of claim 1, wherein the graph traversal algorithm is selected from Dijkstra's algorithm or the A* search algorithm to optimize the execution path based on weighted factors including latency, cost, and format compatibility.

3. The method of claim 1, wherein the processing nodes include AI-based services such as speech-to-text conversion, text translation, text-to-speech conversion, video enhancement, and audio enhancement.

4. The method of claim 1, wherein the execution pipeline is dynamically updated to reroute processing tasks when a node becomes unavailable or experiences increased latency.

5. The method of claim 1, wherein the system prioritizes low-latency network paths for real-time applications, such as background noise removal or speech recognition in videoconferencing.

6. The method of claim 1, wherein the execution pipeline considers the hardware architecture of processing nodes, selecting GPU-accelerated nodes for deep-learning-based AI tasks and CPU-based nodes for general-purpose media processing.

7. The method of claim 1, wherein the system enables customizable pipeline configurations based on specific use-case priorities, including latency, cost, or processing efficiency.

8. The method of claim 1, wherein the system performs multi-stage AI processing by composing subgraphs of alternative processing nodes when preferred nodes are at full capacity or unavailable.

9. A system for orchestrating artificial intelligence (AI) and media processing workflows in a distributed computing environment, **characterized in**:
a. a plurality of distributed processing nodes, each configured to execute specific AI or media processing tasks;
b. a central controller configured to dynamically discover available processing nodes and determine their processing capabilities and network locations;
c. a graph-based processing model representing processing nodes as a directed acyclic graph (DAG), wherein each edge represents a communication path between nodes;
d. a graph traversal module configured to apply a graph traversal algorithm to determine an optimal execution pipeline based on network latency, computational load, and resource availability;
e. a task assignment module configured to allocate AI and media processing tasks to the selected processing nodes;
f. a monitoring module configured to track real-time network conditions and computational load of the nodes; and
g. a pipeline adjustment module configured to dynamically update the execution pipeline in response to changes in network latency, server availability, or processing demands.

10. The system of claim 9, wherein the graph traversal module applies Dijkstra's algorithm or the A* search algorithm to identify an optimal execution path based on weighted factors including latency, cost, and format compatibility.

11. The system of claim 9, wherein the processing nodes include AI-based services such as speech-to-text conversion, text translation, text-to-speech conversion, video enhancement, and audio enhancement.

12. The system of claim 9, wherein the pipeline adjustment module is configured to reroute processing tasks when a node becomes unavailable or experiences increased latency.

13. The system of claim 9, wherein the system prioritizes low-latency network paths for real-time applications, such as background noise removal or speech recognition in videoconferencing.

14. The system of claim 9, wherein the task assignment module considers the hardware architecture of processing nodes, selecting GPU-accelerated nodes for deep-learning-based AI tasks and CPU-based nodes for general-purpose media processing.

15. The system of claim 9, wherein the system enables customizable pipeline configurations based on specific use-case priorities, including latency, cost, or processing efficiency.

16. The system of claim 9, wherein the pipeline adjustment module is configured to construct alternative processing subgraphs when preferred nodes are at full capacity or unavailable, ensuring continuous operation of AI and media processing workflows.
